# EUROPEAN PATENT SPECIFICATION

(11) **EP 0 779 740 B1**
(45) Date of publication and mention of the grant of the patent: **25.07.2001**
(21) Application number: 96203401.3
(22) Date of filing: 11.12.1996
(51) Int. Cl.: H04N 7/173

(54) **Cable network system for video distribution and bidirectional data transmission, providing frequency conversion in the return path**
Kabelnetzwerksystem für Videoverteilung und bidirektionale Datenübertragung, mit Freqenzumsetzung im Rückkanal
Système de réseau de câble pour distribution vidéo et transmission bidirectionelle de données, avec conversion de bande de fréquence en voie de retour

(30) Priority: 15.12.1995 NL 1001909
(43) Date of publication of application: 18.06.1997
(73) Proprietor: van der Fluit, Jacobus Petrus, 3723 RD Bilthoven (NL)
(72) Inventor: van der Fluit, Jacobus Petrus, 3723 RD Bilthoven (NL)
(74) Representative: Jilderda, Anne Ayolt

(56) References cited:
- EP-A- 0 419 137
- WO-A-94/16534
- US-A- 5 408 259

## Description

The present invention relates to a cable network system for transmission of radio and television signals combined with bi-directional data traffic, comprising a main station which, via a signal supply link, is linked to various primary distribution centres, each of which is linked to end connections by intervention of at least various secondary distribution centres and amplification tools, in addition to which a signal return path is connected in parallel to the amplification tools with a low-pass filter with the single aim to pass a lower band through the signal frequency spectrum. The invention also relates to channel conversion tools for use in it.

Nowadays, there is a growing need for a high-grade extensive infrastructure for data transmission, in which especially the transmission speed, the so-called bit rate, is a central issue. Numerous new telemedia applications and social changes require long-range data transmission which exceeds the maximum bit rate of the public telephone network. The maximum bit rate according to the current ISDN standard, for example, is 64 or 128 Kbits per second. In practice of transmission of larger computer files comprising many MB(ytes), this limited bit rate results in unacceptably long delays, while video, even when using the most advanced encoding and compression techniques, still requires a bit rate of 2 Mbits per second for VHS quality, and even 5-6 Mbits per second for PAL quality. It is obvious that the bit rate of an ISDN connection is absolutely insufficient for this.

The aim of the present invention is providing a cable network system with a capacity for bi-directional data traffic at bit rates which are required in current telemedia applications, at the same time connecting to a high-grade cable network system which is already available, namely a current central antenna installation (CAI).

CAI network systems have been primarily designed for distributing radio and television programmes, and have, for example in this country, been implemented on a relatively large scale. The programme signals are received in a main station, either directly from terrestrial or cosmic transmitters, or indirectly from, for example, a public telecommunication network, and transmitted from the main station via a signal supply link, which comprises, for example, high-grade fibre optics or coaxial cables, to primary distribution centres, the so-called district centres. In this process, the various television and radio transmitters are configured in the desired channel position which is ideal for transmission. If necessary, in the district centres, the signals are converted into another channel position which is compatible with the receiving options of the subscriber's/end user's radio or television set. From the district centres, the signals are transmitted in various directions to, for example eight, secondary distribution centres, the signals often being amplified by means of a group amplifier. Behind each group amplifier, the signals are divided and re-distributed in various, for example six, directions. In the end, each branch will reach a further distribution point in the form of a power amplifier with a so-called multi-tap dividing the signals. The signal of each output of the multi-tap is transferred to an end connection. Typically a power amplifier provides 24 to 36 subscribers with signals.

In itself, it is nothing new to use a CAI network system for bi-directional data transfer. Currently, CAI network systems in which return traffic is possible by using the so-called lower band in the frequency spectrum, are operational. This lower band covers roughly the frequency range below television band I (47-68 MHz). Frequency ranges between, for example, 5 and 25, or 5 and 42 MHz are used. If (a part of) a television band I is not used for distribution of television programmes, the lower band may be assigned a larger frequency range, for example 5 to 55 MHz. The CAI network system is, as it were, reversed in a sense that, in parallel to the available amplifiers a signal return path is connected with a low-pass filter with the single aim to pass the above-mentioned lower band. Bi-directional traffic is possible by distributing the outgoing signal in a reserved frequency band in combination with radio and television programmes, and return a data return signal via the lower band.

Examples of prior art systems that involve structures as identified above are disclosed in, eg., US-A-5 408 259, WO-A-94/16534, and EP-A-0 419 137.

However, a disadvantage of such a structure is that all subscribers are to resort to one and the same lower band, which means that for each subscriber only a minor part of it will be available. Since usually more than 20,000 subscribers will be connected to the CAI network system, for each user a band width of 1 to 2 KHz maximum is available. Therefore, in practice, this system is applied only for services which require a small band width, for example, social/medical alarm systems, telemetry of e.g. energy and water meters, burglary and fire alarm systems, teleshopping, etc. For telemedia applications which require more band width, but which are currently being used more and more, for example video conferencing and transfer of larger, often graphics-oriented, computer files, such a system is, however, insufficient.

The aim of the present invention is, among others, providing a cable network system of the type as referred to in the opening lines which does not have such limitations, that is to a lesser extent, and which, as a consequence, is also compatible with advanced, wide-band telemedia applications.

The invention is as defined in the appended claims.

In order to realise the intended aim, the characteristic of a cable network system of the type as referred to in the opening lines is that the signal return path includes channel conversion tools in at least one of the primary distribution centres in order to shift the signal frequency band of the data return signal of any secondary distribution centre linked to it from the lower band to a unique band with a higher position in the frequency spectrum and that the various primary distribution centres are linked to the main station via a data return link which is separated from the signal supply link, in which data return link the various unique upper bands of the various secondary distribution centres may be jointly transmitted. In case of this solution for bi-directional data traffic, the lower band from any secondary distribution centre is separately transmitted to the main station. This means for each secondary distribution centre that only the users connected to it have to share the lower band. If we consider, for example, the above-mentioned CAI network system, in which each secondary distribution centre on the average provides approximately 120 to maximally approximately 200 subscribers with a signal, hence for every user a band width of 250 to 400 KHz is available. This is an increase by, roughly, a factor of 200 compared to the current capacity in a presently available CAI network system which is equipped for data return traffic.

In the primary distribution centre the lower band which is part of a secondary distribution centre is converted into a unique, reserved channel with a higher position in the frequency spectrum. This also applies to the lower band signals from the other secondary distribution centres. The channel positions which have been converted this way are transmitted in parallel to the main station via a high-quality data return link. For the outgoing signal, a signal band used by all groups may be opted for, but, if so desired, the outgoing signal may also be divided analogously over various bands, which are individual for each group.

An advantage for the present invention is that for such high-quality bi-directional data traffic it is only necessary to upgrade the link between the main station and the primary distribution centres to the extent that a high-quality signal return path is connected in parallel to the path for the outgoing signal. The structure of the cable system which stretches behind the primary distribution centre, which is considerably more widely branched, and in turn is the reason why upgrading is considerably more expensive, will not be subject to modifications in the invention, and only the above-mentioned conversion tools need to be added. Cable system damping and signal weakening associated with it is relatively low in the lower part of the frequency spectrum and especially in the lower band discussed here, as a consequence of which the return signal in the current cable system will not or hardly need amplification.

An additional advantage of the cable network system according to the invention is that the band for the return signal and, if applicable, also for the outgoing signal, is shared by the users which are connected to one and the same secondary distribution centre only. This is a significant restriction compared to the current network in which the lower band is shared by all subscribers in the network and therefore a considerable step forward in the effort to protect data traffic against undesired "bugging".

According to the invention, the influence of interference signals is considerably restricted in the network. Especially as a consequence of external radiation on the connection cables at the end connections, often by intervention of wall sockets, interference signals may reach the lower band. These interference signals are transmitted by, for instance, short-wave transmitters and domestic appliances, which are very common nowadays. By accumulation of such interference signals from the various subscribers connected to the network the signal transmission in the lower band may be severely hindered, if not blocked with a large number of subscribers. By offering a separate lower band for each group of users linked to a secondary distribution centre in accordance with the present invention, such an accumulation may be significantly restricted since the interference signals are added up for this part of the users only. By doing so, an average improvement of 9 dB compared to a presently available CAI network may be realised, as a consequence of which the signal transmission integrity is guaranteed to a significantly higher extent.

On the basis of the drawings, the invention will be explained in more detail below. In the drawings:
Figure 1 is a schematic representation of a cable network system which is suitable for bi-directional data traffic in accordance with an implementation method of the present invention;
Figure 2 is an equivalent-circuit diagram of an implementation method of primary channel conversion tools for application in the network of figure 1; and
Figure 3 is an equivalent-circuit diagram of an implementation method of secondary channel conversion tools for application in the network of figure 1.
The figures are purely schematic and have not been drawn to scale. For reasons of clarity, some dimensions are represented extremely large or small. The corresponding parts in the figures are to the best possible extent indicated with one and the same reference number.

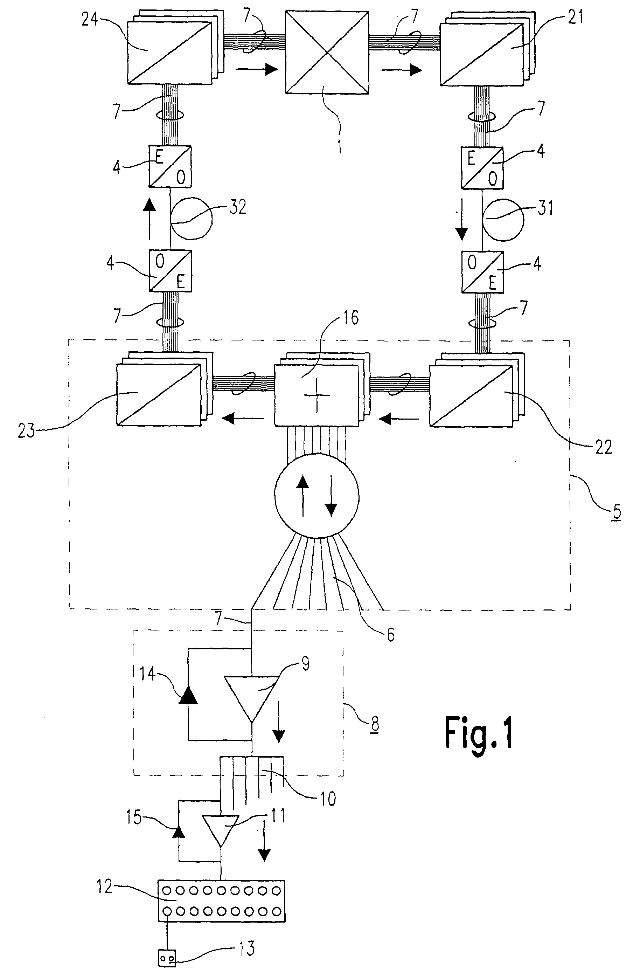

The cable network system of figure 1 is, among others, intended as a CAI network system and includes a main station 1 in which signals of radio and television programmes are received, either directly from terrestrial or cosmic transmitters, or from an external cable link. The signals are placed in an optimal channel position which is optimal for transmission by channel conversion tools 21 and, subsequently, transmitted via a high-quality signal supply cable link 31, the so-called main network system. The main network system 31 may include a coaxial cable with the required signal amplifiers to compensate damping in the cable, but preferably includes, as is the case here, a fibre optics link in which such amplifiers can be left out. At the beginning and the end of the fibre optics cable 31, electro-optical converters 4, in the form of optical transmitters and receivers, ensure the required interface between the optical and electric part of the network system.

Via the main network system 31 the signals are transmitted to primary distribution centres 5, the so-called district centres, one of which has been drawn here, but, in reality, for example, five of which are provided with the same signal via an optical distributor. In the district centre, channel conversion, if necessary, takes place by means of appropriate channel conversion tools 22, in order to have the channel position matched with the receiving options of standard radio and television sets. If a main network system 31 concerns a fibre optics link such a conversion, for that matter, may be left out in most cases. From each distribution centre 5, the signal is distributed into various directions 6, for example eight, via coaxial cable 7 to secondary distribution centres 8, which have been provided with group amplifiers 9. Behind each group amplifier 9 the signal is re-distributed among, for instance, six branches 10. Each branch 10 subsequently reaches an end amplifier 11, which, after amplification, transmits the signal to further distribution tools in the form of a multitap 12 to which 24-36 end connection points 13, wall sockets, may be connected.

In the network system, return traffic is possible by using the so-called lower band of the signal frequency spectrum. This lower band roughly covers the frequency area below television band I (47-68 MHz). Frequency ranges between, for example, 5 and 25 or 5 and 42 MHz are used. If (a part of) television band I is not used for distribution of television programmes, a wider frequency range may be assigned for the lower band, for instance 5 to 55 MHz. The lower band is especially suitable for transporting signals which are not or hardly amplified since the coaxial cable damping for such frequencies is relatively low. For this lower band, the network system is, as it were, reversed, and therefore includes signal return paths 14 and 15 which are connected in parallel to the amplification tools 9 and 11 for the outgoing signal. Generally these data return paths include a low-pass filter with the single aim to pass the above-mentioned lower band and, if so desired, may be provided with signal amplifiers. In order to avoid situations in which all subscribers would have to share one and the same lower band, as a consequence of which only a minor part of it would be available for every user which would only be suitable for small-band services, at least one of the primary distribution centres 5 includes, in accordance with the invention, channel conversion tools 23 in order to shift the signal frequency band of the return signal of each secondary distribution centre 8 from the lower band to a reserved band with a higher position in the frequency spectrum, which is unique for each secondary distribution centre 8.

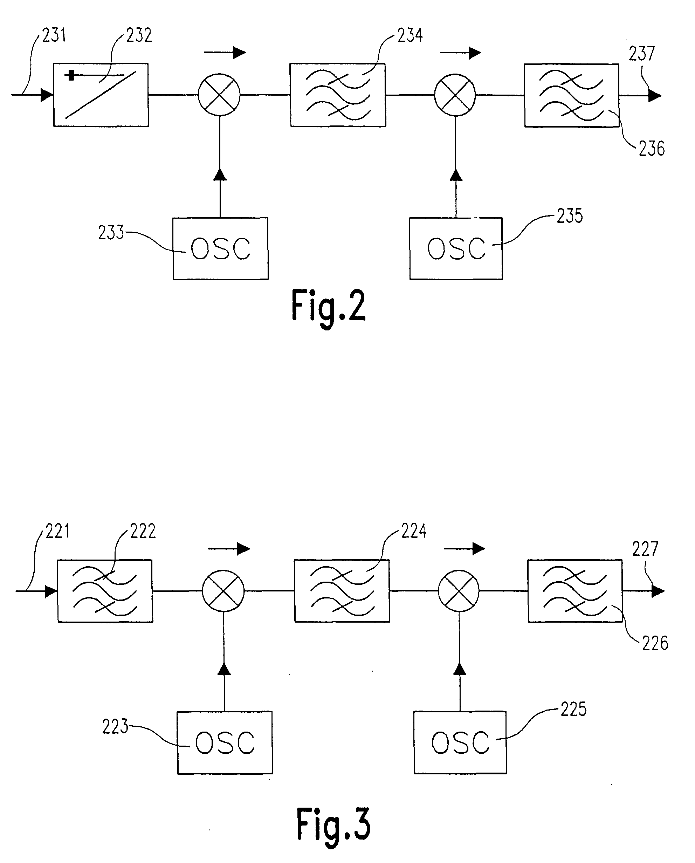

Figure 2 shows the above-mentioned conversion tools in more detail. At input 231 the channel conversion tools 23 are fed with an input signal in the lower band, typically with a frequency range between 5 and 25 or 55 MHz. Via a separator 232 and by means of a mixer and an oscillator at a fixed frequency of, for example, 1.6 GHz, the signal is shifted to an intermediate frequency range of 1.605 to 1.655 GHz and led through a pass or band filter 234. With a mixer and a second oscillator 235 with an adjustable frequency, for instance of 1.760 GHz with increasing steps of 70 MHz, the signal is brought into the desired frequency range of high frequency between 100 and 860 MHz, which frequency is adjusted differently for each lower band from different secondary distribution centres. Finally, each individual lower band from one of the various secondary distribution centres will have been shifted to a unique, reserved band with a higher position from a group of 105-155, 175-225, 245-295 ... and 735-785 MHz contained in an output signal 237 of the circuit. Since typically 120 to 150 subscribers per secondary distribution centre 8 are provided with a signal, this coordination of unique lower band signals means that the above-mentioned lower band will have to be shared by this number of users only. For each user this results in an available band width of 300 to 400 KHz which is more than sufficient for modern advanced telemedia services, such as video conferencing and transmission of larger computer files.

Before being shifted to a reserved higher frequency by the channel conversion tools 23, the lower band signals from the various secondary distribution centres 8 are added up by tools 16, and, subsequently, transferred to the main station 1, by a shared wide-band data return link 32. The return main network system, which is separate from the signal supply link 31, may comprise, if necessary, further channel conversion tools 24. Here, preferably a fibre optics link is applied too, given its superior transmission characteristics.

The outgoing signals to the secondary distribution centres are prepared in a similar way and split by channel conversion tools 22. In a district centre 5, the outgoing signal is filtered out for each group of subscribers connected to a specific secondary distribution centre 8, and, subsequently, injected into the signal of the radio and television programmes for transport to the relevant secondary distribution centre 8 in question only. This way, each group of subscribers will only receive the signal package intended for it. A possible implementation form of appropriate tools 22 is represented in figure 3. An input signal, within a frequency range of, for example, 100 and 800 MHz, is presented at input 221, and led through a filter 222. Subsequently, the signal is modulated by means of a mixer and an oscillator 223 having a frequency which may be adjusted between 1.76 and 2.39 GHz, and transferred into an intermediate frequency range of 1.605 to 1.655 GHz. With a mixer and a second oscillator 225 with a fixed frequency of 1.205 GHz, the signal is finally transferred to a desired frequency range, for example, between 400 and 450 MHz, and filtered by a further band filter 226. The output signal may be taken at output 227 and transmitted to the secondary distribution centre 8 for which it is intended. This way, each group of subscribers, connected to a specific secondary distribution centre, only receives the signal band which is intended for this specific group, and as a consequence of this, illegal bugging and use of the information transmitted is significantly restricted compared to a fully shared CAI network system in which the information transmitted is basically available for anybody.

Thus, a wide-band bi-directional path is created between an end connection 13, for example a wall socket in a building or residence, and the central point or main station 1. Instead of this path being shared by all users in the network system, or by a considerable part of them, for the return traffic, a same band in the network system is, according to the invention, shared by the users who are connected to one and the same secondary distribution centre 8 only. In practice, the number of users in this group amounts to approximately 100 to 150. The available band width per end user may, therefore, in such cases in a presently available CAI network system be increased by a factor of 200 or more compared to a conventional method for realising bi-directional traffic in it.

Moreover, an additional advantage of the division of the return path among several, separated lower bands is that the extent of interference and distortions of return signals in the network system is decreased. Such signal distortions can often, partly, be attributed to external radiation on the connection cables with the end users. If there is a large number of users, the accumulated interference signals may interfere or even entirely block signal transmission in the lower band. Since, according to the invention, the lower band is shared by a restricted group of end users only, such an accumulation of interference signals in it is decreased. Thus, in practice, an average improvement of 9 dB or more may be realised.

For the implementation of the invention as far as cable work is concerned, all in all it is only necessary to extend a presently available CAI network system by a return main network system. The remaining cable work, which is significantly more widely branched, and therefore considerably more expensive for implementation in double, does not require modification and may remain single, as a consequence of which it is possible to upgrade a presently available CAI network system for wide-band bi-directional data traffic at relatively low cost.

Although in the above paragraphs the invention has been explained on the basis of one example of implementation only, it is obvious that the invention is not restricted to this example at all. On the contrary, within the framework of the invention there are many possible varieties and forms. To give another example: the invention may also be applied in cable network systems which are entirely constructed with electric conductive cable, whether or not coaxial, or in which the signals from the secondary distribution centres are directed to the end users, without or with intervention of additional further distribution points. Furthermore, the various distribution factors have been given as an example only and may in practice be adjusted to specific requirements or wishes concerning the network system. Not only may the invention be implemented in a presently available CAI cable network system in a relatively simple way, but also may a cable network system, whether or not intended for CAI applications, be configured in accordance with the invention from the beginning. Moreover, the conversion tools which have been described in more detail are only given as an example and, within the framework of the invention, may be replaced by other solutions for an up-conversion or down-conversion to or from a channel in the wide-band link between the main station and the primary distribution centre, in which the converted lower bands of other groups of end users are transmitted jointly, although separately, via the same link.

Within the framework of the present invention, the concept of "data" is to be defined in a broad perspective, which is common practice in the area of multimedia. Any form of analogous or digital information is to be included in this definition, either visual or auditive, or of any other nature. For telemedia applications and services the options for transport of digital information via a wide-band path are often used. By means of, for example, a modem, or any other network connection, both with the user and the main station, for any user in the network system a wide-band, bi-directional data link can be made in accordance with the invention. The bi-directional traffic that is thus enabled will generally include a combination of images (e.g. video, text, pictures, drawings, illustrations), sound (e.g. speech, music) and other information, e.g. text and other files and operating signals. Presently, moving images, that is video, make high demands with respect to the link, and more specifically to its bit rate. When using the most advanced encoding and compression techniques it is possible to restrict the required bit rate to 2 Mbits per second for VHS quality, and to 5-6 Mbits per second for PAL quality. The bit rate of the bi-directional data path which, in accordance with the invention, is available for any user in the network system, is for this type of applications more than sufficient in both directions.

It should be noted that within several applications and services the relation between the outgoing traffic and the return traffic will be asymmetrical. As a rule, the traffic towards the end user will be more voluminous than the traffic from the end user. The following services may serve as examples of this: pay television, par-per-view and video-on-demand, as well as several forms of consultation services in which sometimes large amounts of information are retrieved from a central database. According to the invention, such asymmetries may be built in in the cable network system.

## Claims

1. Cable network system for transmission of radio and television signals combined with bi-directional data traffic, comprising a main station (1) which, via a signal supply link (31), is linked to various primary distribution centres (5), each of which is linked to end connections (13) by intervention of at least various secondary distribution centres (8) and amplification tools (9, 11), in addition to which a signal return path (15, 14) is connected in parallel to the amplification tools with a low-pass filter with the single aim to pass a return path signal at a lower band below said signals frequency spectrum, wherein the signal return path in at least one of the primary distribution centres (5) comprises channel conversion tools (23) in order to shift the signal frequency band of the lower band return signal from each secondary distribution centre linked to it to a respective unique band at a position above said signals frequency spectrum, and wherein the various primary distribution centres are linked with the main station by means of a data return link (32) which is separate from the signal supply link, in which data return link the various unique upper bands associated with the various secondary distribution centres may be jointly transmitted.

2. Cable network system according to claim 1, characterised in that further distribution tools (12) are included between the secondary distribution centres and the end connection.

3. Cable network system according to claim 2, characterised in that the primary distribution centres (5) comprise district centres, each of which is linked to a maximum of 8 secondary distribution centres, that the secondary distribution centres comprise group amplifiers (9) each of which is linked to approximately 6 additional distribution tools and that said further distribution tools (12) comprise multi-tab connections (12), each of which serves between 2 and 36 end connections.

4. Cable network system according to claims 1, 2 or 3, characterised in that the data return link comprises a fibre optics cable which at both far ends is linked to the network via electro-optical conversion tools.

5. Cable network system according to any one or several more of the previous claims, characterised in that the above-mentioned lower band has a range between approximately 5 and 25 MHz, or between approximately 5 and 55 MHz and that the conversion tool (23) shift a said lower band to a said unique higher band in the frequency range between approximately 60 Mhz and 860 Mhz.

6. Cable network system according to any one or several more of the previous claims, characterised in comprising tools (22) for shifting the outgoing signal from a primary distribution centre to a secondary distribution centre to a channel position which is unique for any secondary distribution centre.

## Patentansprüche

1. Kabelnetzwerksystem zur Übertragung von Radio- und Fernsehsignalen in Verbindung mit Zweirichtungsdatenverkehr, bestehend aus einem Hauptanschluss (1), der über eine Signalversorgungsleitung (31) mit verschiedenen primären Verteilerzentren (5) verbunden ist, wobei jedes Verteilerzentrum mit Endanschlüssen (13) durch Intervention von zumindest unterschiedlichen sekundären Verteilerzentren (8) und Verstärkern (9,11) verbunden ist, wobei zusätzlich eine Signalrückleitung (15,14) mit einem Tiefpassfilter parallel zu den Verstärkern verbunden ist, mit dem einzigen Ziel, ein Rückleitungssignal mit einem frequenzniedrigeren Band, das unterhalb des Frequenzspektrums des besagten Signals liegt, durchzulassen, wobei die Signalrückleitung in zumindest einem der primären Verteilerzentren (5) Vorrichtungen (23) zur Kanalkonvertierung einschließt, um das Signalfrequenzband des frequenzniedrigeren Rückführungssignals von jedem mit ihm verbundenen sekundären Verteilerzentrum in Richtung zu einem jeweils einzigartigen Band mit einer Lage, die oberhalb des besagten Frequenzspektrums liegt, zu verschieben, und wobei die verschiedenen primären Verteilerzentren mit dem Hauptanschluss mit Hilfe einer Datenrückleitung (32), die von der Signalversorgungsleitung getrennt ist, verbunden sind, in welcher Datenrückleitung die verschiedenen einzigartigen oberen Bänder, die den verschiedenen sekundären Verteilerzentren zugeordnet sind, gemeinsam übertragen werden können.

2. Kabelnetzwerksystem nach Anspruch 1, dadurch gekennzeichnet, dass weitere Verteilervorrichtungen (12) zwischen den sekundären Verteilerzentren und den Endanschlüssen enthalten sind.

3. Kabelnetzwerksystem nach Anspruch 2, dadurch gekennzeichnet, dass die primären Verteilerzentren (5) Bezirkszentren einschließen, wovon jedes mit maximal 8 sekundären Verteilerzentren verbunden ist, dass die sekundären Verteilerzentren Gruppenverstärker (9) einschließen, wovon jeder mit ungefähr 6 zusätzlichen Verteilervorrichtungen verbunden ist, und dass die besagten zusätzlichen Verteilervorrichtungen (12) Mehrfachtabulatorverbindungen (12) besitzen, wovon jede zwischen 2 und 36 Endanschlüsse bedient.

4. Kabelnetzwerksystem nach Anspruch 1, 2 oder 3 dadurch gekennzeichnet, dass die Datenrückleitung ein faseroptisches Kabel einschließt, das an seinen beiden äußersten Enden über elektrooptische Konvertierungsvorrichtungen mit dem Netzwerk verbunden ist.

5. Kabelnetzwerksystem nach irgendeinem oder mehreren der vorhergehenden Ansprüche, dadurch gekennzeichnet, dass das oben genannte frequenzniedrigere Band einen Bereich zwischen ungefähr 5 und 25 MHz hat, oder zwischen ungefähr 5 und 55 MHz und dass die Konverter (23) ein besagtes niedriges Band in Richtung zu einem besagten einzigartigen höheren Band im Frequenzbereich zwischen ungefähr 60 MHz und 860 MHz verlagern.

6. Kabelnetzwerksystem nach irgendeinem oder mehreren der vorhergehenden Ansprüche, dadurch gekennzeichnet, dass Vorrichtungen (22) zur Verlagerung des Ausgangssignals von einem primären Verteilerzentrum in ein sekundäres Verteilerzentrum in eine für jedes sekundäre Verteilerzentrum einzigartige Kanalposition vorhanden sind.

## Revendications

1. Système de réseaux câblés pour la transmission de signaux radio et télévision combinés de trafic bidirectionnel de données, comprenant une station principale (1), laquelle est raccordée, via une connexion d'adduction de signal, à plusieurs centres de distribution primaires (15), dont chacun est raccordé à des connexions finales (13) par l'entremise de plusieurs centres de distribution secondaires (8) et outils amplificateurs, en complément desquels un chemin de retour du signal (14, 15) est raccordé en parallèle aux outils amplificateurs avec un filtre de rétrogradation ayant pour seul but de faire passer un signal retour dans une bande inférieure à ladite gamme de fréquences des signaux, dans laquelle le chemin de retour du signal d'au moins l'un des centres de distribution primaires (5) comprend des outils de conversion de canal (23) pour transposer la bande de fréquence des signaux par laquelle passe le signal retour de la bande inférieure de chaque centre de distribution secondaire y étant raccordé à une bande unique respective située à une position supérieure à ladite gamme de fréquences des signaux, et dans laquelle les différents centres de distribution primaires sont raccordés à la station principale au moyen d'une connexion de retour des données (23), laquelle est séparée de la connexion d'adduction de signal et dans laquelle les différentes bandes supérieures uniques associées aux différents centres de distribution secondaires peuvent être transmises conjointement.

2. Système de réseaux câblés conforme à la revendication 1 et caractérisé par le fait que des outils de distribution supplémentaires (12) sont inclus entre les centres de distribution secondaires et la connexion finale.

3. Système de réseaux câblés conforme à la revendication 2 et caractérisé par le fait que les centres de distribution primaires (5) comprennent des centres régionaux, dont chacun est raccordé à 8 centres de distribution secondaires au maximum, qu'ils comprennent des amplificateurs de groupe (9), dont chacun est raccordé à quelque 6 outils de distribution accessoires, et que lesdits outils de distribution supplémentaires (12) comprennent des connexions multiples (12), dont chacune sert entre 2 et 36 connexions finales.

4. Système de réseaux câblés conforme aux revendications 1, 2 ou 3 et caractérisé par le fait que la connexion de retour des données comprend aux deux extrémités un câble en fibre optique et qu'elle est raccordée au réseau via des outils de conversion electrooptiques.

5. Système de réseaux câblés conforme à l'une ou à plusieurs des revendications précédentes et caractérisé par le fait que la bande inférieure susmentionnée a un champ s'étendant de 5 à 25 MHz environ, ou de 5 à 55 MHz environ, et que les outils de conversion (23) transposent une bande inférieure donnée à une bande supérieure donnée dans un champ de fréquences s'étendant de 60 à 860 MHz environ.

6. Système de réseaux câblés conforme à l'une ou à plusieurs des revendications précédentes et caractérisé par le fait qu'il comprend des outils (22) pour transposer le signal sortant d'un centre de distribution primaire vers un centre de distribution secondaire à une position de canal unique pour chaque centre de distribution secondaire.
